# EUROPEAN PATENT SPECIFICATION

(11) **EP 3 984 963 B1**
(45) Date of publication and mention of the grant of the patent: **14.05.2025**
(21) Application number: 21201491.4
(22) Date of filing: 07.10.2021
(51) Int. Cl.: C02F 1/46, C02F 1/469, C02F 103/08, C02F 1/461

(54) **DESALINATION CELL WITH ELECTRODES INCLUDING PRUSSIAN BLUE COMPOUNDS**
ENTSALZUNGSZELL UMFASSEND ELEKTRODEN MIT PREUSSISCHBLAUVERBINDUNGEN
CELLULE DE DÉSALINISATION AVEC DES ÉLECTRODES COMPRENANT DES COMPOSÉS DE BLEU DE PRUSSE

(30) Priority: 13.10.2020 US 202017068894
(43) Date of publication of application: 20.04.2022
(73) Proprietor: Robert Bosch GmbH, 70442 Stuttgart (DE)
(72) Inventor: Kornbluth, Mordechai, Brighton, MA 02135 (US); Kim, Soo, Arlington, MA, 02474 (US); Tuffile, Charles, Swansea, MA, 02777 (US); Hellstrom, Sondra, East Palo Alto, CA, 94303 (US); Metzger, Michael, Sunnyvale, CA, 94087 (US); Kuppan, Saravanan, Sunnyvale, CA, 94086 (US)

(56) References cited:
- CN-A- 111 186 886
- CN-A- 111 186 887
- US-A1- 2020 148 560
- US-B2- 10 550 014

## Description

### TECHNICAL FIELD

The present disclosure relates to desalination cell electrodes configured to reduce calcium carbonate formation and/or carbon dioxide gas formation.

### BACKGROUND

Quality drinking water is an ever-growing need as world population increases. Yet, sources of fresh water on land are limited, with some currently being depleted significantly. The water quality of other fresh water sources may be compromised by industrial and agricultural processes and the expansion of cities.

Considering the foregoing, technologies are being developed to obtain fresh water from abundant sea and ocean water sources. However, these water sources are saline water that contain high concentrations of dissolved salt, which render the water unsuitable for human consumption, agricultural use, or industrial processes. Saline water requires desalination to lower its concentration of dissolved solids (e.g. salt) so that it can be utilized as a source of drinking water.

Efforts to desalinate water date back thousands of years. For example, first recorded attempts include evaporation of salt water conducted by sailors at sea. The first large-scale modern desalination process of multi-stage flash distillation was developed during the middle of the 20^{th} century. Yet, common problems persist with desalination processes. These problems include without limitation relatively high energy demands, environmental concerns, and material issues related to corrosion of membranes. These problems have prevented a widespread use of desalination to provide drinking water from saline water resources.

Cells for removing ions from a flow of water are disclosed in US 2020 / 148560 A1, CN 111 186 887 A, CN 111 186 886 A and US 10 550 014 B2.

### SUMMARY

According to one embodiment, a desalination cell with the features of claim 1 is disclosed.

### BRIEF DESCRIPTION OF THE DRAWINGS

Figure 1 depicts a schematic diagram of a non-limiting example of a desalination cell according to one embodiment.
Figure 2 is a graph plotting reaction data for reactions between FeCo₂(CN)₆ and calcium bicarbonate, which are not comprised by the present invention.

### DETAILED DESCRIPTION

Except in the examples, or where otherwise expressly indicated, all numerical quantities in this description indicating amounts of material or conditions of reaction and/or use are to be understood as modified by the word "about" in describing the broadest scope of the invention. Practice within the numerical limits stated is generally preferred. Also, unless expressly stated to the contrary: percent, "parts of," and ratio values are by weight; the description of a group or class of materials as suitable or preferred for a given purpose in connection with the invention implies that mixtures of any two or more of the members of the group or class are equally suitable or preferred; description of constituents in chemical terms refers to the constituents at the time of addition to any combination specified in the description, and does not necessarily preclude chemical interactions among the constituents of a mixture once mixed.

The first definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

It must also be noted that, as used in the specification and the appended claims, the singular form "a," "an," and "the" comprise plural referents unless the context clearly indicates otherwise. For example, reference to a component in the singular is intended to comprise a plurality of components.

As used herein, the term "substantially," "generally," or "about" means that the amount or value in question may be the specific value designated or some other value in its neighborhood. These terms may be used to modify any numeric value disclosed or claimed herein. Generally, the term "about" denoting a certain value is intended to denote a range within ± 5% of the value. As one example, the phrase "about 100" denotes a range of 100 ± 5, i.e. the range from 95 to 105. Generally, when the term "about" is used, it can be expected that similar results or effects according to the invention can be obtained within a range of ± 5% of the indicated value. The term "substantially" may modify a value or relative characteristic disclosed or claimed in the present disclosure. In such instances, "substantially" may signify that the value or relative characteristic it modifies is within ± 0%, 0.1%, 0.5%, 1%, 2%, 3%, 4%, 5% or 10% of the value or relative characteristic.

It should also be appreciated that integer ranges explicitly include all intervening integers. For example, the integer range 1 to 10 explicitly includes 1, 2, 3, 4, 5, 6, 7, 8, 9, and 10. Similarly, the range 1 to 100 includes 1, 2, 3, 4, .... 97, 98, 99, 100. Similarly, when any range is called for, intervening numbers that are increments of the difference between the upper limit and the lower limit divided by 10 can be taken as alternative upper or lower limits. For example, if the range is 1.1. to 2.1 the following numbers 1.2, 1.3, 1.4, 1.5, 1.6, 1.7, 1.8, 1.9, and 2.0 can be selected as lower or upper limits.

In the examples set forth herein, concentrations, temperature, and reaction conditions (e.g., pressure, pH, flow rates, etc.) can be practiced with plus or minus 50 percent of the values indicated rounded to or truncated to two significant figures of the value provided in the examples. In a refinement, concentrations, temperature, and reaction conditions (e.g., pressure, pH, flow rates, etc.) can be practiced with plus or minus 30 percent of the values indicated rounded to or truncated to two significant figures of the value provided in the examples. In another refinement, concentrations, temperature, and reaction conditions (e.g., pressure, pH, flow rates, etc.) can be practiced with plus or minus 10 percent of the values indicated rounded to or truncated to two significant figures of the value provided in the examples.

For all compounds expressed as an empirical chemical formula with a plurality of letters and numeric subscripts (e.g., CH₂O), values of the subscripts can be plus or minus 50 percent of the values indicated rounded to or truncated to two significant figures. For example, if CH₂O is indicated, a compound of formula C_{(0.8-1.2)}H_{(1.6-2.4)}O_{(0.8-1.2)}. In a refinement, values of the subscripts can be plus or minus 30 percent of the values indicated rounded to or truncated to two significant figures. In still another refinement, values of the subscripts can be plus or minus 20 percent of the values indicated rounded to or truncated to two significant figures.

As used herein, the term "and/or" means that either all or only one of the elements of said group may be present. For example, "A and/or B" means "only A, or only B, or both A and B". In the case of "only A", the term also covers the possibility that B is absent, i.e. "only A, but not B".

The term "comprising" is synonymous with "including," "having," "containing," or "characterized by." These terms are inclusive and open-ended and do not exclude additional, unrecited elements or method steps.

The phrase "consisting of" excludes any element, step, or ingredient not specified in the claim. When this phrase appears in a clause of the body of a claim, rather than immediately following the preamble, it limits only the element set forth in that clause; other elements are not excluded from the claim as a whole.

The phrase "consisting essentially of" limits the scope of a claim to the specified materials or steps, plus those that do not materially affect the basic and novel characteristic(s) of the claimed subject matter.

With respect to the terms "comprising," "consisting of," and "consisting essentially of," where one of these three terms is used herein, the presently disclosed and claimed subject matter can include the use of either of the other two terms.

The term "one or more" means "at least one" and the term "at least one" means "one or more." The terms "one or more" and "at least one" include "plurality" as a subset.

Description of constituents in chemical terms refers to the constituents at the time of addition to any combination specified in the description and does not necessarily preclude chemical interactions among constituents of the mixture once mixed. First definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

The Earth's increasing population has created an ever-growing need for clean fresh water for human consumption, agricultural purposes, and industrial purposes. Fresh water refers to a water solution having a low salt concentration (e.g. less than 1 %). With limitations on fresh water sources, numerous attempts have been made to produce fresh water from abundant sea and ocean waters by desalination. Desalination is a process of removing mineral components from saline water. Removal of salt and other chemicals from the saline water requires electric or thermal energy to separate the saline water into two streams. The two streams are a freshwater stream containing a low concentration of dissolved salts and a second stream of concentrated brine having a high concentration of dissolved salts.

Various desalination technologies have been developed, for example evaporation, freezing, distillation, reverse osmosis, ion exchange, and electrodialysis. Yet, these technologies have certain drawbacks that prevent their widespread use and limit their success. For example, reverse osmosis typically requires a large input of electrical energy, which makes this technology quite expensive. Additionally, reverse osmosis utilizes selective membranes which are susceptible to fouling or unwanted accumulation of mineral deposits on the membrane surfaces. The membranes thus need frequent replacement which contributes to maintenance demands and increased cost.

Electrodialysis is another membrane desalination technology implementing ion exchange membranes. Electrodialysis may be costly and does not have a barrier effect against micro bacterial contamination. Yet, membrane-free technologies present other challenges. For example, freeze-thaw typically relies on extended periods of natural sub-zero temperatures and is therefore limited to certain climatic conditions. Multi-effect distillation utilizes several stages or effects during which feed water is heated by steam in tubes onto which saline water is being sprayed. But this technology presents high operating costs unless waste heat is available for the desalination process, and high temperatures may increase corrosion and scale formation.

Among the newly developed concepts are electrochemical approaches to desalination such as a desalination battery or an electrochemical device. Desalination batteries use an electric energy input to extract sodium and chloride ions, as well as other impurity ions from saline water to generate fresh water. The battery thus presents dual-ion electrochemical deionization technology, including sodium and chloride dual-ion electrochemical electrodes to which voltage is applied to bring about separation of saline water into fresh water having a relatively low concentration of dissolved salts and a concentrated brine stream.

It would be desirable to provide a water treatment system utilizing a desalination cell. A non-limiting example of a water treatment system utilizing a desalination battery may include a container to retain a liquid solution such as saline water or desalinated water, two electrodes, a power source, a saline water inlet, and a freshwater outlet. Additional components such as additional inlets, outlets, and the like are contemplated. The two electrodes may be separated by an exchange membrane. The exchange membrane may be either anion or cation exchange membranes. The exchange membrane may include a separator on either or both sides.

The container may be a container, compartment, housing, vessel, can, canister, tank, or the like of any shape, size, or configuration capable of obtaining, retaining, holding, and/or releasing a liquid solution such as saline water, brackish water, sea water, ocean water, fresh water, sweet water, drinking water, desalinated water, contaminated water, industrial water, etc. The container is spacious enough to house an adequate amount of a water solution undergoing desalination. Accordingly, dimensions thus differ based on a specific application. The container may be large enough to serve industrial applications. The container may be made from different materials capable of withstanding corrosion, temperature fluctuations, changing pH, varying pressure, and be resistant to other chemical, mechanical, and/or physical conditions.

The container may be made from glass, plastic, composite, metal, ceramic, or a combination of materials. The container may feature one or more protective coatings. The container may be made from a material configured to minimize the occurrence of water contamination. The container may be made from one or more materials that are nontoxic and comply with drinking water standards.

The electrodes are arranged within the battery to be in fluid communication with the water present in the container. The electrodes are at least partially submerged in the water solution. The electrodes may be fully submerged in the water solution. The electrodes may be placed on the opposite sides of a container, placed centrally in the container, or both be located on the same side of the container. The electrodes may be located next to each other or be separated by a distance with the presence of a separators and exchange membrane (either anion exchange membrane or cation exchange membrane).

The electrodes may be made from the same or different material, depending on the operating condition and device design. The first electrode, the second electrode, or both electrodes may be made from expanded graphite. Graphite is a crystalline allotrope of carbon and is an example of a semimetal. Graphite presents the most stable form of carbon under standard conditions. Graphite is an electric conductor with highly anisotropic acoustic and thermal properties and is self-lubricating. Graphite has a layered, planar structure. Graphite's individual layers are called graphene. The electrode may include expanded graphite having an interlayer distance sufficient to accommodate Na⁺ ions. The expanded graphite may be formed by modifying and/or expanding the interlayer distance of the pristine graphene layers.

As a result of the expanded interlayer distance, expanded graphite can uptake cations and anions from saline water, seawater, brackish water, or the like. Expanded graphite can uptake cations including, but not limited to Na⁺, Mg²⁺, Al³⁺, Si⁴⁺, K⁺, Ca⁺, Sc³⁺, Ti^{2+13+ 4+}, V^{2+/3+/4+/5+}, Cr ^{3+/6+}, Mn^{2+/3+/4+}, Fe^{2+/3+}, Ni^{2+/3+/4+}, Cu²⁺, Zn²⁺, Sn^{2+/4+}, Pb⁴⁺, etc. and anions including, but not limited to, single anion species such as F⁻, Cl⁻, Br, I⁻, S^{-/2-}, anion complexes such as ClO₄⁻, ClO₃⁻, ClO₂⁻, BrO₄⁻, BrO₃⁻, SO₄²-, SiO₃²⁻, CN⁻, metal-containing anions such as MX_{y}O_{zn-} (where M = Na, Mg, Al, Si, K, Ca, Sc, Ti, V, Cr, Mn, Fe, Ni, Cu Zn, Mo, Sn, Cs, and Pb; X = F, Cl, Br, I, N, and P; and 0<y≤5; 0≤z≤5; 1≤n≤4), and the like.

The electrodes of the desalination cell may be configured to function as intercalation hosts. Intercalation refers to reversible inclusion of one or more ions into materials with layered structures. The spaces between layers may serve as a temporary storage for one or more types of ions (e.g. alkali and alkali earth metal ions). An electrode may include an intercalation active material so that the electrode functions as an intercalation host. The intercalation active material may be configured to intercalate cations, anions or both.

Besides the active material, one of the electrodes or both may include one or more conductivity agents, one or more polymeric binders, and/or other components. The electrode(s) may include intercalation active material in the amount of about 70 to 99 wt. %, 75 to 97 wt. %, or 60 to 95 wt. %, based on the total weight of the electrode. An electrode may include one or more conductivity agents in the amount of about 1 to 40 wt. %, 2.5 to 30 wt. %, or 5 to 20 wt. %, based on the total weight of the electrode. An electrode may include one or more polymeric binders in the amount of about 1 to 30 wt. %, 2.5 to 20 wt. %, or 5 to 15 wt. %.

A non-limiting example of a conductivity agent may include carbon black, conductive carbon black, amorphous carbon, carbon fibers, quaternary ammonium salt(s), alkyl sulfonate(s), halogen-free cationic compound(s), the like, or a combination thereof.

A non-limiting example of a polymeric binder may be polyvinylidene fluoride (PVdF), polyacrylonitrile (PAN), poly(methyl methacrylate) (PMMA), polyethylene glycol (PEO), polyimide, polydopamine, poly(ethylene glycol) diacrylate, polymethylpentene, nylon, metalaramid, polyether imide, copolyester, polyetherketone, carboxymethyl cellulose, styrene-butadiene rubber (SBR), copolymers and blends such as poly(vinylidenefluoride-hexafluoropropylene) (PVdF-HFP), poly(vinylidenefluoride-chlrotrifluoroethylene) (PVdF-CTFE), poly(methyl methacrylate-vinyl acetate) (PMMA-VAc), poly(ethylene glycol) diacrylate (PEGDA), poly(methyl methacrylate-acrylonitrile-vinyl acetate) (PMMA-AN-VAc), poly(methyl methacrylate-co-butyl acrylate) (PMMA-co-BA), poly(3,4-ethylenedioxythiophene) polystyrene sulfonate-co-polyethylene glycol (PEDOT-co-PEG), the like, or a combination thereof.

A buildup of calcium carbonate (CaCO₃) on the surface of an electrode of a desalination cell can make transport of alkali and alkali earth metal ions in and out of an intercalation host structure more difficult. One of the reactions that can lead to the formation of CaCO₃ may involve calcium bicarbonate (Ca(HCO₃)₂). Calcium bicarbonate decomposes into water (H₂O) and carbon dioxide (CO₂). The calcium is typically present in the water source in ionic form (otherwise referred to as "hard water"). Hard water may lead to decreased performance of the desalination cell.

Accordingly, it is beneficial to soften hard water in the desalination cell to remove calcium ions according to the following reaction (1):

0.5 Ca + HCO₃ → 0.5CaCO₃ + 0.5CO₂ + 0.5H₂O (1)

Prussian blue (PB) compounds and Prussian blue analogue (PBA) compounds have a significant amount of void space where mono and/or divalent cations can be easily inserted. PB compounds and PBA compounds are generally referred to as PB compounds. When brine or hard water is inserted into the desalination system to be cleaned, it is possible to push Na⁺, K⁺, Ca²⁺, and/or Mg²⁺ ions into electrodes including one or more PB compounds, leaving clean water that can be collected and reused.

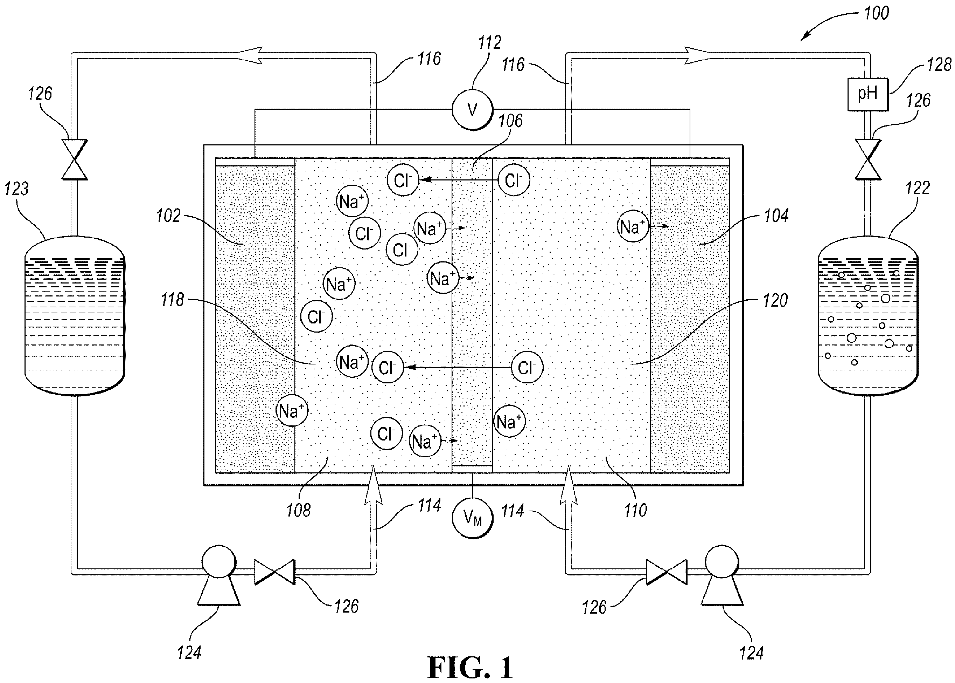

A non-limiting example desalination cell 100 for use in a water treatment device is depicted in Figure 1. Desalination cell 100 includes electrodes 102 and 104 and anion exchange membrane (AEM) 106 placed between electrodes 102 and 104. AEM 106 separates individual water compartments 108 and 110. Electrodes 102 and 104 are connected to voltage source 112. Battery cell 100 also includes one or more water inlets 114 and water outlets 116.

One or more inlets 114 and one or more outlets 116 may be used to bring in or release saline or desalinated water. The number of one or more inlets 114 and one or more outlets 116 per compartment 108 and 110 may be the same or different. For example, water compartment 108 may have one more inlet than water compartment 110. One or more inlets 114 may be located between AEM 106 and electrodes 102 and 104. One or more inlets 114, one or more outlets 116, or both may be located centrally between AEM 106 and electrodes 102 and 104. One or more inlets 114 may be located directly across from one or more outlets 116. Alternatively, one or more inlets 114 and one or more outlets 116 of the same compartment 108 or 110 may be staggered such that one or more inlets 114 and one or more outlets 116 are not aligned or are not placed on the same axis. One or more inlets 114, one or more outlets 116 or both may have the same or different diameter. One or more inlets 114, one or more outlets 116, or both may connect battery 100 with reservoir 122, reservoir 123, or both.

Desalination cell 100 and additional battery cells disclosed herein may be connected to one or more water reservoirs 122 for storing saline or desalinated water, one or more pumps 124 configured to control water flow rate to and from desalination cell 100, one or more valves 126 connected to one or more pumps 124, and/or one or more devices 128 configured to check, determine, or monitor water quality such as a pH meter, water softener, etc. Reservoir 122 may be a container, compartment, housing, vessel, can, canister, tank, or the like of any shape, size, or configuration capable of obtaining, retaining, holding, and/or releasing a liquid solution such as saline water, brackish water, sea water, ocean water, fresh water, sweet water, drinking water, contaminated water, industrial water, etc. One or more pumps 124 may be automatic, manual, or both. One or more pumps 124 may be in one or more inlet pipes, one or more outlet pipes, a stream connected to water reservoirs 122 and/or 123, or a combination thereof.

Desalination cell 100 may include two symmetrical electrodes 102, 104 including the same or similar chemistry and loading of the electrode material. Alternatively, desalination cell 100 may include an asymmetric electrode configuration such that electrode 104 is made at least partially or entirely from a different material than electrode 106. The electrode materials may share similar structural characteristics such as same space group, but the concentration of ions such as Na⁺, Ca²⁺, or Mg²⁺ may differ.

Desalination cell 100 may be operated in the following manner. A positive voltage V may be applied to desalination cell 100 to release cations such as Na⁺ from one of electrodes 102 and 104. The cations are dispersed with the saline water in one of water compartments 108 and 110, specifically brine compartment 118 including the saline water solution having a first concentration c1 of dissolved salts. The saline water in brine compartment 118 may be supplied through one of the water inlets 114. As cations cannot travel through AEM 106, the concentration of Na⁺ in brine compartment 118 increases. Anions such as Cl⁻ become attracted and travel through the AEM 106 to neutralize the cations in brine compartment 118. At the same time, cations such as Na⁺ ions intercalate into the other side of electrodes 102 and 104 due to charge neutrality and the applied voltage bias. This process creates clean water compartment 120 including a fresh or desalinated water solution having a second concentration c2 of dissolved salts on the opposite side of AEM 106 such that c1 > c2.

Desalination cell 100 may operate in cycles (intercalation and de-intercalation), where the water flows continuously. Under the continuous flow, the desalinated water from clean water compartment 120 may be stored in a reservoir 122. Alternatively, desalination cell 100 may operate as a batch desalination device, where a limited amount of water may be supplied to a compartment to be cleaned in a smaller scale operation. Alternatively, or in addition, a semi-continuous flow of water may be supplied to desalination cell 100 such that water compartments 108 and 110 may be refilled with additional saline water and may operate in the reverse direction in the next cycle. In an alternative embodiment, desalination cell 100 may be designed as a cylindrical tubular cell. Both compartments 108 and 110 may be used for water purification in reverse operating direction.

In a non-limiting example, a continuous collection of clean water in successive cycles may be provided by utilizing clean water reservoir 122 and a recycling loop for water purification. During the start-up, electrodes 102 and 104 are at similar state-of-charge (for example 50%), then electrode 102 is discharged (toward 0%) and electrode 104 is charged toward 100% SOC. In the first cycle, the first target ions including Na⁺, K⁺, Mg²⁺, Ca²⁺, and Pb²⁺, and the like may be removed from electrodes 102 and 104 including an intercalation host material. Anions are added to brine compartment 118 due to the cation-anion attraction (neutrality). Clean water compartment 120 thus contains desalinated water that may be collected. The next cycle allows to flush ions out of the electrodes 102 and 104, expelling wastewater. Electrodes 102 and 104 may be also available for the next water purification cycle.

Because a desalination cell is a type of electrochemical cell where voltage is applied, it is possible for the inserted ions to react with other species that are present to form undesirable byproducts. PB compounds have a cyanide group (CN⁻), where six cyanide groups are typically coordinating a transition metal such as Fe, Cu, Ni, Mn, etc. to form a local octahedron coordination. As describe above, CaCO₃ formation can take place because the desalination device is designed to collect Ca²⁺ from hard water (with high Ca and Mg contents), when voltage is being applied to the electrochemical cell. The Ca²⁺ ions inserted into the intercalation host electrodes may lead to undesired side reactions (e.g. limescale formation) when in contact with PB compounds. The source of Ca²⁺ ions may be from Ca²⁺ ions already present in the intercalation host or Ca²⁺ ions dissolved in water residing in the desalination cell. Limescale buildup at the intercalation host electrodes can lead to electrode surface passivation, which can slow down or stop ion and/or electron transport that is necessary to the functioning of the electrochemical cell. Another potential negative side effect is CO₂ gas evolution. If a carbon source is generated from decomposition of one or more PB compounds in an electrode from a cyanide (CN) group, as opposed to from a carbonate that is dissolved in a water source, then associated electrode degradation may lead to a decreased capacity of the desalination cell. Typically, limescale formation is a larger issue at high temperatures, where the reduced solubility of carbonate causes a precipitate of calcium carbonate, which builds up into an undesired limescale coating.

Considering the foregoing, what are needed are electrode materials including one or more PB compounds that are relatively stable against calcium bicarbonate. The stability reduces the likelihood that unwanted side reactions take place between the PB compounds and other compositions present in the desalination cell, including other electrode materials. These side reactions take place between calcium ions and the PB intercalation hosts to form unwanted reaction products (e.g. limescale and CO₂ gas evolution). Reducing limescale buildup may be applied to many particular applications of desalination cells such as without limitation human consumption, whole residential applications, coffee makers, dishwashers, agricultural purposes, and industrial purposes.

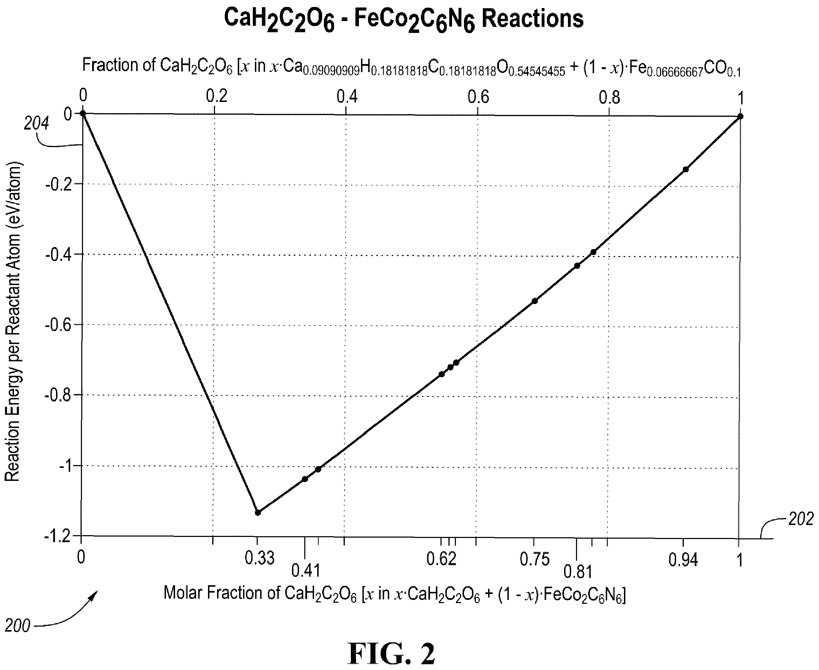

Figure 2 is graph 200 plotting reaction data for reactions between FeCo₂(CN)₆ with calcium bicarbonate, which are not comprised by the present invention. X axis 202 of graph 200 is the relative molar fractions of FeCo₂(CN)₆ and calcium carbonate given by the equation x in x·CaH₂C₂O₆ + (1-x)· FeCo₂C₆N₆. For instance, if x equals 0 then the molar fraction of calcium carbonate is 0% and the molar fraction of FeCo₂(CN)₆ is 100%. In other words, when x equals 0, the mixture is pure FeCo₂(CN)₆. As another example, if x equals 1 then the molar fraction of calcium carbonate is 100% and the molar fraction of FeCo₂(CN)₆ is 0%. In other words, when x equals 1, the mixture is pure calcium carbonate. Y axis 204 of graph 10 shows the reaction enthalpy in eV/atom.

The interface reactions toolkit, available from open-access materials database (https://materialsproject.org/#apps/interfacereactions) of the Materials Project, is used to analyze stable chemical reactions between FeCo₂(CN)₆ and Ca(HCO₃)₂ (calcium bicarbonate) as shown in Figure 2 that can yield CaCO₃. Table 1 shows the results of this analysis. According to this analysis, CaCO₃ first forms as a decomposition product with a reaction enthalpy (Eᵣₓₙ) of -1.010 eV/atom, when mole fraction (x) is 0.434 (i.e., 56.6% PB compound reacting with 43.4% calcium bicarbonate).

**Table 1**

| Molar Fraction | Reaction Equation | Eᵣₓₙ (eV/atom) |
|---|---|---|
| 0.333 | 0.667 FeCo₂(CN)₆ + 0.333 CaH₂(CO₃)₂ → 0.222 CoCO₃ + 1.111 CoN + 0.667 HC₂N₃ + 0.333 Ca(FeO₂)₂ + 0.444 N₂ + 3.111 C | -1.135 |
| 0.412 | 0.588 FeCo₂(CN)₆ + 0.412 CaH₂(CO₃)₂ → 0.353 CoCO₃ + 0.824 CoN + 0.824 HC₂N₃ + 0.118 CaC₂(NO)₂ + 0.294 Ca(FeO₂)₂ + 2.118 C | -1.039 |
| 0.434 | 0.566 FeCo₂(CN)₆ + 0.434 CaH₂(CO₃)₂ → 0.34 CoCO₃ + 0.792 CoN + 0.151 CaCO₃ + 0.868 HC₂N₃ + 0.283 Ca(FeO₂)₂ + 2.038 C | -1.010 |
| 0.622 | 0.378 FeCo₂(CN)₆ + 0.622 CaH₂(CO₃)₂ → 0.559 CoCO₃ + 0.198 CoN + 0.432 CaCO₃ + 0.414 H₃C₃N₅ + 0.189 Ca(FeO₂)₂ + 1.279 C | -0.738 |
| 0.634 | 0.366 FeCo₂(CN)₆ + 0.634 CaH₂(CO₃)₂ → 0.573 CoCO₃ + 0.079 Co₂N + 0.452 CaCO₃ + 0.423 H₃C₃N₅ + 0.183 Ca(FeO₂)₂ + 1.168 C | -0.718 |
| 0.643 | 0.357 FeCo₂(CN)₆ + 0.643 CaH₂(CO₃)₂ → 0.583 CoCO₃ + 0.464 CaCO₃ + 0.429 H₃C₃N₅ + 0.179 Ca(FeO₂)₂ + 0.131 Co + 1.095 C | -0.705 |
| 0.750 | 0.25 FeCo₂(CN)₆ + 0.75 CaH₂(CO₃)₂ → 1.5 HCNO + 0.208 CoCO₃ + 0.625 CaCO₃ + 0.125 Ca(FeO₂)₂ + 0.292 Co + 0.667 C | -0.529 |
| 0.806 | 0.194 FeCo₂(CN)₆ + 0.806 CaH₂(CO₃)₂ → 0.935 HCNO + 0.113 H₆C(NO)₂ + 0.387 CoCO₃ + 0.71 CaCO₃ + 0.097 Ca(FeO₂)₂ + 0.629 C | -0.425 |
| 0.826 | 0.174 FeCo₂(CN)₆ + 0.826 CaH₂(CO₃)₂ → 0.152 H₅CNO₃ + 0.891 HCNO + 0.348 CoCO₃ + 0.739 CaCO₃ + 0.087 Ca(FeO₂)₂ + 0.565 C | -0.388 |
| 0.938 | 0.062 FeCo₂(CN)₆ + 0.938 CaH₂(CO₃)₂ → 0.375 H₅CNO₃ + 0.641 CO₂ + 0.125 CoCO₃ + 0.906 CaCO₃ + 0.031 Ca(FeO₂)₂ + 0.203 C | -0.151 |

The framework of the analysis made in Figure 2 and Table 1 is used to further examine other PB compounds with the first or second general compound disclosed above. The analysis includes determining the mole fraction (x) where CaCO₃ first appears as a decomposition product. If the decomposition reaction includes more calcium bicarbonate (CB) to be consumed, relative to the amount of PB compound, this electrode material would be more desired against limescale formation (i.e., increase CB/PB ratio), because less of the electrode material would degrade per unit CB. The analysis may also include analyzing the reaction enthalpy (*E*ᵣₓₙ) for the given reaction. A relatively more positive *E*ᵣₓₙ makes the limescale reaction (CaCO₃ formation) more difficult to take place. The analysis may also look at other relevant decomposition products. Other decomposition products (e.g. Ca(FeO₂)₂) may have the same or similar blocking or build-up effect compared with CaCO₃, thereby hindering ionic transport. The analysis may also examine whether undesirable CO₂ gas evolution may occur in certain PB compounds. When CaCO₃ formation is reduced, the other resulting byproducts (e.g. transition metal carbonates, metal oxide, etc.) may be examined.

Table 2 shows characteristics of PB compounds available from the Materials Project. The space group of the PB compounds of Table 2 are found to be either *F-43m* or *Fm-3m* (which are both cubic structures). The hull distance (*E*ₕᵤₗₗ) of most PB compounds are significantly different from other stable compounds in the Materials Database such as oxide, nitrides, carbides, metals, etc. When the value of *E*ₕᵤₗₗ is zero, the given compound is thermodynamically "stable" at *T* equals 0K. Because they lie on the convex hull of a given chemical compounds, such compounds do not decompose to other chemical species because they lie on the convex hull of the given chemical compound. A compound with *E*ₕᵤₗₗ less than 25 meV/atom can be accessed at room temperature via experimental synthesis. However, as can be seen in Table 2, almost all the compounds listed have very high *E*ₕᵤₗₗ values since their predicted decomposed species include very stable metal nitrides, carbon, and/or nitrogen (N₂). While many of the compounds listed in Table 2 are accessible using experimental synthesis and are found to be stable in reality, the reported *E*ₕᵤₗₗ for these compounds are quite high due to the presence of more stable phase mixtures listed in the Table 2. Lastly, Table 2 provides the DFT bandgap for the compounds identified in Table 2, where most of the compounds except K₂FeNiC₆N₆ are found to be highly conducting with zero or small bandgap (less than 0.2 eV), thereby enabling electron transport during the intercalation electrochemical reaction. This characteristic can be used to appropriately adjust or reduce the number of additives in the electrode composition.

As shown below in Table 2, spacegroup, hull distance (*E*ₕᵤₗₗ), stable decomposition phase mixture, and bandgap (*E*_{g}) are provided for selected PB compounds. PB compounds contain two to three transition metal cations *(i.e.,* Fe, Co, Cu, and Ni), zero to two alkali metals *(i.e.,* Li, Na, and K), and six cyanide (CN⁻) groups.

**Table 2**

| Compound | Spacegroup | *E*ₕᵤₗₗ [eV/atom] | Decompose to | *E*_{g} [eV] |
|---|---|---|---|---|
| FeCo₂C₆N₆ | *F-43m* (cubic) | 0.509 | CoN, FeN, C, N₂ | 0 |
| FeCu₂C₆N₆ | *F-43m* (cubic) | 0.579 | FeN, Cu, C, N₂ | 0 |
| FeNi₂C₆N₆ | *F-43m* (cubic) | 0.588 | Ni₃N, FeN, C, N₂ | 0.168 |
| K₂FeCoC₆N₆ | *Fm-3m* (cubic) | 0.152 | KC₂N₃, K₂CN₂, FeN, Co, C | 0 |
| K₂FeCuC₆N₆ | *Fm-3m* (cubic) | 0.221 | KC₂N₃, K₂CN₂, FeN, Cu, C | 0 |
| K₂FeNiC₆N₆ | *Fm-3m* (cubic) | 0.154 | KC₂N₃, K₂CN₂, FeN, FeNi₃, C | 1.507* |
| Li₂FeCuC₆N₆ | *Fm-3m* (cubic) | 0.429 | Li₂CN₂, FeN, Cu, C, N₂ | 0 |
| Na₂FeCuC₆N₆ | *Fm-3m* (cubic) | 0.041 | NaC₂N₃, Na₂CN₂, FeN, Cu, C | 0 |

While the DFT band gap of ~1.5 eV (semi-conducting) is reported for K₂FeNiC₆N₆ in the Materials Project, the reported DFT bandgap may have some error. According to one theory, when K₂FeNiC₆N₆ loses some of the K⁺ ions, it may become more conducting (i.e., semiconductor-to-metal transition).

Other PB compounds, which are not currently available in the Materials Project database, may be analyzed. These PB compounds are listed in Table 3. PB compounds including alkali metals such as Li, Na, or K eventually lose the alkali metals during the activation step of desalination cell (e.g. the charging process). Therefore, three different PB compositions (i.e. FeCo(CN)₆, FeCu(CN)₆, and FeNi(CN)₆) without alkali metalsare included in Table 3. In addition, Table 3 includes Fe₄[Fe(CN)₆]₃ for analysis.

**Table 3**

| Compound | Note |
|---|---|
| FeCoC₆N₆ | Without alkali metal (K) |
| FeCuC₆N₆ | Without alkali metals (Li, Na, or K) |
| FeNiC₆N₆ | Without alkali metal (K) |
| Fe₄[Fe(CN)₆]₃ | Reported in *RSC Adv.* 2014, 4, 42991 |

In Table 4, the chemical reactivity of the compounds listed in Table 2 with calcium bicarbonate is examined. Instead of listing all decomposition products (similar to Table 1) at the given molar fraction (x) where CaCO₃ first appears, only the relevant decomposition species such as CaCO₃, MCO₃, Ca(FeO₂)₂, CO₂, metal, and metal oxides are listed in Table 4. Also, Table 4 also provides the CB/PB ratio and the reaction enthalpy. Also, in the chemical reactions shown in Figure 4, all PB compounds are abbreviated as "PB" and calcium bicarbonate is abbreviated as "CB". In Table 4, PB compound reactions with calcium bicarbonate (CB; Ca(HCO₃)₂, equivalent to Ca + 2HCO₃ → H₂O + CaCO₃ + CO₂) to form CaCO₃, are reported, where interface reactions toolkit of the Materials Project database are used.

**Table 4**

| Compounds | First decomposition reactions with CaCO₃ product | CB/PB | *Eᵣₓₙ* (eV/atom) |
|---|---|---|---|
| FeCo₂C₆N₆ | 0.566PB + 0.434CB → 0.151CaCO₃ + 0.34CoCO₃ + 0.283Ca(FeO₂)₂ + ... | 0.77 | -1.010 |
| FeCu₂C₆N₆ | 0.5PB + 0.5CB → 0.25CaCO₃ + 0.25Ca(FeO₂)₂ + 0.625CO₂ + Cu + ... | 1.00 | -0.914 |
| FeNi₂C₆N₆ | 0.529PB + 0.471CB → 0.206CaCO₃ + 0.265Ca(FeO₂)₂ + 0.574CO₂ + ... | 0.89 | -0.953 |
| K₂FeCoC₆N₆ | 0.378PB + 0.622CB → 0.054CaCO₃ + 0.378K₂Ca(CO₃)₂ + 0.18CoCO₃ + 0.189Ca(FeO₂)₂ + ... | 1.65 | -0.800 |
| K₂FeCuC₆N₆ | 0.267PB + 0.733CB → 0.333CaCO₃ + 0.267K₂Ca(CO₃)₂ + 0.133Ca(FeO₂)₂+ 0.267Cu + ... | 2.75 | -0.619 |
| K₂FeNiC₆N₆ | 0.286PB + 0.714CB → 0.286CaCO₃ + 0.286K₂Ca(CO₃)₂ + 0.143Ca(FeO₂)₂ + ... | 2.50 | -0.641 |
| Li₂FeCuC₆N₆ | 0.462PB + 0.538CB → 0.308CaCO₃ + 0.462Li₂CO₃ + 0.231 Ca(FeO₂)₂ + 0.462Cu + ... | 1.16 | -0.873 |
| Na₂FeCuC₆N₆ | 0.267PB + 0.733CB → 0.067CaCO₃ + 0.267Na₂Ca₂(CO₃)₃ + 0.133Ca(FeO₂)₂+ 0.267Cu + ... | 2.74 | -0.557 |

As an observation from Table 4, the change in alkali metal ions (i.e., K vs. Na) can significantly affect the final reaction products. Based on this observation, it is anticipated that all alkali metal ions, Li⁺, Na⁺, and K⁺ are removed from the electrode host during the activation cycle. For example, it is observed that Na₂FeCuC₆N₆ leads to the formation of Na₂Ca₂(CO₃)₃ and K₂FeCuC₆N₆ leads to the formation of K₂Ca₂(CO₃)₃. It is also difficult to determine whether Na₂Ca₂(CO₃)₃ builds-up at the electrode surface, similar to CaCO₃. It is expected that both Na₂FeCuC₆N₆ and K₂FeCuC₆N₆ loses Na⁺ and K⁺ from the intercalation host, not affecting the outcome of this analysis, regardless of the products being formed when reacting with calcium bicarbonate, Ca(HCO₃)₂, as listed in Table 4.

In Table 5, FeCoC₆N₆, FeCuC₆N₆, and FeNiC₆N₆ are additionally analyzed in combination with re-listing information from Table 4 for FeCo₂C₆N₆, FeCu₂C₆N₆, and FeNi₂C₆N₆ PB compounds to directly compare FeCoC₆N₆, FeCuC₆N₆, and FeNiC₆N₆ versus FeCo₂C₆N₆, FeCu₂C₆N₆, and FeNi₂C₆N₆ (with an additional transition metal in PB compounds). Here are the comparisons based on the analysis of the data from Table 5: (1) (FeCo₂C₆N₆ versus FeCoC₆N₆) FeCo₂C₆N₆ leads to less CaCO₃ and CoCO₃ formation; (2) (FeCu₂C₆N₆ versus FeCuC₆N₆) same amount of CaCO₃ and CO₂, but, more Cu formation for FeCu₂C₆N₆; and (3) (FeNi₂C₆N₆ versus FeNiC₆N₆) Similar amount of carbonates and CO₂.

**Table 5**

| Compounds | First decomposition reactions with CaCO₃ product | CB/PB | *Eᵣₓₙ* (eV/atom) |
|---|---|---|---|
| FeCo₂C₆N₆ | 0.566PB + 0.434CB → 0.151CaCO₃ + 0.34CoCO₃ + 0.283Ca(FeO₂)₂ + ... | 0.77 | -1.010 |
| FeCoC₆N₆ | 0.508PB + 0.492CB → 0.237CaCO₃ + 0.407CoCO₃ + 0.254Ca(FeO₂)₂ + ... | 0.97 | -0.973 |
| FeCu₂C₆N₆ | 0.5PB + 0.5CB → 0.25CaCO₃ + 0.25Ca(FeO₂)₂ + 0.625CO₂ + Cu + ... | 1.00 | -0.914 |
| FeCuC₆N₆ | 0.5PB + 0.5CB → 0.25CaCO₃ + 0.25Ca(FeO₂)₂ +0.625CO₂ + 0.5Cu + ... | 1.00 | -0.950 |
| FeNi₂C₆N₆ | 0.529PB + 0.471CB → 0.206CaCO₃ + 0.265Ca(FeO₂)₂ + 0.574CO₂ + ... | 0.89 | -0.953 |
| FeNiC₆N₆ | 0.514PB + 0.486CB → 0.229CaCO₃ + 0.257Ca(FeO₂)₂ + 0.6CO₂ + ... | 0.95 | -0.971 |
| FeMn₂C₆N₆ | 0.357PB + 0.643CB → 0.464CaCO₃ + 0.518MnCO₃ + 0.179Ca(FeO₂)₂ + 0.196MnO + ... | 1.80 | -0.746 |
| FeMn_{1.6}C₆N₆ | 0.367PB + 0.633CB → 0.404CaCO₃ + 0.587MnCO₃ + 0.183Ca(FeO2)₂ + ... | 1.72 | -0.770 |
| FeMnC₆N₆ | 0.462PB + 0.538CB → 0.308CaCO₃ + 0.462MnCO₃ + 0.231 Ca(FeO₂)₂ + ... | 1.16 | -0.931 |

Initial analysis suggests that FeCo₂C₆N₆ is a beneficial compounds to mitigate CaCO₃ formation and restrict CO₂ gas formation. The CB/PB ratio and *E*ᵣₓₙ for these six compounds are similar, varying from 0.77 to 1.00 and -0.914 to -1.010 eV/atom, respectively. Based on the analysis of Table 5, reducing Co contents (FeCo₂C₆N₆ to FeCoC₆N₆) trigger more CaCO₃ and CoCO₃ formations. According to Table 5, FeCuC₆N₆, FeNiC₆N₆, FeCu₂C₆N₆, and FeNi₂C₆N₆ lead to CO₂ gas formation. In addition, Cu-containing PB compounds have a metallic Cu as a final decomposition product. This partly explains instability of the Cu-containing PB compounds, where Cu can further oxidize to CuO and/or ionize to Cu²⁺. While Ni-containing PB compounds in Table 5 do not lead to Ni formation (i.e., improved stability versus Cu- containing PB), it is predicted that the Ni-containing PB compounds lead to CO₂ gas evolution. Lastly, FeMn₂C₆N₆ and FeMnC₆N₆ are analyzed in Table 5. While the Mn-substituted PB compounds lead to significantly more CaCO₃ (and, MnCO₃), the CB/PB ratios and *E*ᵣₓₙ increased significantly for FeMn₂C₆N₆. While FeMn₂C₆N₆ forms MnO as a byproduct, FeMnC₆N₆ does not form MnO. Based on the analysis in Table 5, FeMn_{1.6}C₆N₆ may be used as a compound to reduce or eliminate production of MnO. While Mn-containing compounds may lead to higher carbonate formation, we find that both CB/PB ratio and reaction enthalpy are higher for FeMn_{1.6}C₆N₆ than other candidates listed in Table 5. The analysis predicts that FeCo₂C₆N₆ forms least amount of CaCO₃, while some of Co may transform to CoCO₃, in contact with calcium bicarbonate.

Fe₄[M(CN)₆]₃ compounds, where M = Fe, Ni, Cu, Co, and Mn are analyzed, as shown in Table 6. Substituting Fe with Ni or Cu may lead to less CaCO₃ but more Ca(FeO₂)₂ and CO₂ gas formations. In addition, substituting Ni suppresses CaCO₃ formation, but leads to a very high CO₂ gas release. In addition, Fe₄[Cu(CN)₆]₃ forms Cu as one of byproducts, which can further oxidize to CuO or Cu²⁺ especially for the environment similar to desalination cell (i.e., aqueous, abrupt pH change, and/or when voltage is being applied). Substituting Fe with Co or Mn produces less CaCO₃ and no CO₂, but increased amount of MCO₃ (CoCO₃ and MnCO₃). Analysis of the decomposition products suggests that Co and Mn substitutions are beneficial against degradation for desalination applications. Based on an analysis of Table 6, CB/PB ratio for Fe₄[Fe(CN)₆]₃ is high. However, Fe₄[Fe(CN)₆]₃ leads to the highest amount of CaCO₃ (and, also CO₂ gas forms as a byproduct) as shown in Table 6.

Table 6 shows an analysis of Fe₄[M(CN)₆]₃ compounds, where M = Fe, Ni, Cu, Co, and Mn. The chemical reactions of these compounds with calcium bicarbonate (CB; Ca(HCO₃)₂, equivalent to Ca + 2HCO₃ → H₂O + CaCO₃ + CO₂) that forms CaCO₃ are examined using interface reactions toolkit in the Materials Project database.

**Table 6**

| Compounds | First decomposition reactions with CaCO₃ product | CB/PB | *Eᵣₓₙ* (eV/atom) |
|---|---|---|---|
| Fe₄[Fe(CN)₆]₃ | 0.1PB + 0.9CB → 0.55CaCO₃ + 0.35Ca(FeO₂)₂ + 0.275CO₂ + ... | 9.00 | -1.170 |
| Fe₄[Ni(CN)₆]₃ | 0.261PB + 0.739CB → 0.217CaCO₃ + 0.522Ca(FeO₂)₂ + 0.848CO₂ + ... | 2.83 | -1.263 |
| Fe₄[Cu(CN)₆]₃ | 0.25PB + 0.75CB → 0.25CaCO₃ + 0.5Ca(FeO₂)₂ + 0.75Cu + 0.875CO₂ ... | 3.00 | -1.235 |
| Fe₄[Co(CN)₆]₃ | 0.259PB + 0.741CB → 0.224CaCO₃ + 0.569CoCO₃ + 0.517Ca(FeO₂)₂ + ... | 2.86 | -1.266 |
| Fe₄[Mn(CN)₆]₃ | 0.214PB + 0.786CB → 0.357CaCO₃ + 0.643MnCO₃ + 0.429Ca(FeO₂)₂ + ... | 3.67 | -1.171 |

As shown in Table 7, other metal substitution options are explored. Other 3d metals from the periodic table, including Sc, Ti, V, Cr and Zn, as shown in Table 7 are explored. Table 7 shows the analysis of FeMₓ(CN)₆ (where x = 1 or 2) and Fe₄[M(CN)₆]₃ compounds, where M = Sc, Ti, V, Cr, or, Zn.

**Table 7**

| Compounds | First decomposition reactions with CaCO₃ product | CB/PB | *Eᵣₓₙ* (eV/atom) |
|---|---|---|---|
| FeSc₂C₆N₆ | 0.538CB + 0.462PB → 0.308CaCO₃ + 0.462Sc₂O₃ + 0.231Ca(FeO₂)₂ + ... | 1.16 | -0.927 |
| FeScC₆N₆ | 0.4CB + 0.6PB → 0.1CaCO₃ + 0.3Sc₂O₃ + 0.3Ca(FeO₂)₂ + ... | 0.67 | -1.130 |
| FeTi₂C₆N₆ | 0.6CB + 0.4PB → 0.4CaCO₃ + 0.8TiO₂ + 0.2Ca(FeO₂)₂ + ... | 1.5 | -0.848 |
| FeTiC₆N₆ | 0.455CB + 0.545PB → 0.182CaCO₃ + 0.545TiO₂ + 0.273Ca(FeO₂)₂ + ... | 0.83 | -1.077 |
| FeV₂C₆N₆ | 0.4CB + 0.6PB → 0.1 CaCO₃ + 0.45 CO₂ + 0.3 Ca(FeO₂)₂ + ... | 0.67 | -1.046 |
| FeVC₆N₆ | 0.455CB + 0.545PB → 0.182CaCO₃ + 0.545 CO₂ + 0.273 Ca(FeO₂)₂ + ... | 0.83 | -1.017 |
| FeCr₂C₆N₆ | 0.538CB + 0.462PB → 0.308CaCO₃ + 0.462Cr₂O₃ + 0.231 Ca(FeO₂)₂ + ... | 1.16 | -0.880 |
| FeCrC₆N₆ | 0.4CB + 0.6PB → 0.1CaCO₃ + 0.3Cr₂O₃ + 0.3Ca(FeO₂)₂ + ... | 0.67 | -1.110 |
| FeZn₂C₆N₆ | 0.5CB + 0.5PB → 0.25CaCO₃ + 0.125ZnCO₃ + 0.875ZnO + 0.25Ca(FeO₂)₂ + ... | 1.00 | -0.907 |
| FeZnC₆N₆ | 0.478CB + 0.522PB → 0.217CaCO₃ + 0.391ZnCO₃ + 0.261 Ca(FeO₂)₂ + ... | 0.92 | -0.986 |
| Fe₄[Sc(CN)₆]₃ | 0.684CB + 0.316PB → 0.053CaCO₃ + 0.474Sc₂O₃ + 0.632Ca(FeO₂)₂ + ... | 2.16 | -1.423 |
| Fe₄[Ti(CN)₆]₃ | 0.727CB + 0.273PB → 0.182CaCO₃ + 0.818TiO₂ + 0.545Ca(FeO₂)₂ + ... | 2.66 | -1.350 |
| Fe₄[V(CN)₆]₃ | 0.714CB + 0.286PB → 0.143CaCO₃ + 0.786CO₂ + 0.571Ca(FeO₂)₂ + ... | 2.50 | -1.323 |
| Fe₄[Cr(CN)₆]₃ | 0.684CB + 0.316PB → 0.053CaCO₃ + 0.474Cr₂O₃ + 0.632Ca(FeO₂)₂ + ... | 2.16 | -1.404 |
| Fe₄[Zn(CN)₆]₃ | 0.727CB + 0.273PB → 0.545ZnCO₃ + 0.182CaCO₃ + 0.545Ca(FeO₂)₂ + ... | 2.66 | -1.295 |

Among the chemical compounds analyzed in Table 7, FeScC₆N₆, FeTiC₆N₆, or FeCrC₆N₆ produce acceptable amounts of CaCO₃ and no CO₂, but form Sc₂O₃, TiO₂, or Cr₂O₃ as a byproduct. It is improbable that Sc³⁺ and Ti⁴⁺ further oxidize, but Cr³⁺ may oxidize toward Cr⁴⁺ or Cr⁶⁺. FeZnC₆N₆ leads to increased CaCO₃ amount, but no Zn metal or binary oxide formation occurs. Similar phenomenon also occurs for Fe₄[M(CN)₆]₃ compounds where M = Sc, Ti, and Cr, that form Sc₂O₃, TiO₂, and Cr₂O₃, respectively. Sc or Cr substitution effectively suppresses CaCO₃ formation. While Fe₄[Zn(CN)₆]₃ produces more carbonates *(i.e.,* CaCO₃ and ZnCO₃), it does not form any Zn metal or binary oxide as the final decomposition products similar to FeZnC₆N₆, which is a desirable compound.

The desalination cell electrode includes a material having at least one compound of the following formula: AₓM^{I}_{y}M^{II}_{z}(CN)₆, where A is Na, Li or K, 0 ≤ x ≤ 2, M^{I} is a first metal, M^{II} is a second metal, 1 ≤ y, and z ≤ 2. The first metal is Fe, Mn, Co, Ti, Cr, Zn, Ni and V. The second metal is Sc. The second metal is present in a 5 to 50 molar percent of the total molar concentration of the metals in the PB compound.

## Claims

1. A desalination cell comprising:
an electrode including a material having at least one compound of the following formula:
AₓM^{I}_{y}M^{II}_{z}(CN)₆,
wherein A is Na, Li or K, 0 ≤ x ≤ 2, M^{I} is a first metal, M^{II} is a second metal, 1 ≤ y, and z ≤ 2,
and wherein the first metal is Fe, Mn, Co, Ti, Cr or Zn,
**characterized in that**
the second metal comprises between 5 to 50 molar percent of the total molar concentration of the first and second metals, and
the second metal is Sc so that the material having Sc as the second metal is configured to reduce calcium carbonate formation and carbon dioxide gas formation during operation of the desalination cell.

## Patentansprüche

1. Entsalzungszelle umfassend:
eine Elektrode, die ein Material mit mindestens einer Verbindung der folgenden Formel umfasst:
A_{X}M^{I}_{y}M^{II}_{Z}(CN)₆,
wobei A Na, Li oder K ist, 0 ≤ x ≤ 2, M^{I} ein erstes Metall ist, M^{II} ein zweites Metall ist, 1 ≤ y und z ≤ 2,
und wobei das erste Metall Fe, Mn, Co, Ti, Cr oder Zn ist,
**dadurch gekennzeichnet, dass**
das zweite Metall 5 bis 50 Stoffmengenprozent der Gesamtstoffmengenkonzentration des ersten und des zweiten Metalls ausmacht und
das zweite Metall Sc ist, sodass das Material mit Sc als zweites Metall dazu ausgestaltet ist, die Calciumcarbonatbildung und die Kohlenstoffdioxidgasbildung während des Betriebs der Entsalzungszelle zu reduzieren.

## Revendications

1. Cellule de dessalement, comprenant :
une électrode comprenant un matériau ayant au moins un composé de la formule suivante :
A_{X}M^{I}_{y}M^{II}_{Z}(CN)₆,
dans laquelle A est Na, Li ou K, 0 ≤ x ≤ 2, Mⁱ est un premier métal, M^{II} est un second métal, 1 ≤ y et z ≤ 2,
et dans laquelle le premier métal est Fe, Mn, Co, Ti, Cr ou Zn,
**caractérisée en ce que**
le second métal comprend entre 5 et 50 pour cent molaire de la concentration molaire totale des premier et second métaux, et
le second métal est Sc de sorte que le matériau ayant Sc comme second métal est configuré pour réduire la formation de carbonate de calcium et la formation de gaz de dioxyde de carbone pendant le fonctionnement de la cellule de dessalement.
